# EUROPEAN PATENT APPLICATION

(11) **EP 1 146 356 A1**
(43) Date of publication of application: **17.10.2001**
(21) Application number: 00969851.5
(22) Date of filing: 18.10.2000
(51) Int. Cl.: G02B 6/00

(54) **OPTICAL ATTENUATOR**

(30) Priority: 22.10.1999 JP 30060899
(71) Applicant: Showa Electric Wire and Cable Co.,Ltd., Kawasaki-shi, Kanagawa 210-0843 (JP)
(72) Inventor: WATANABE, Masaru, Showa Elt. Wire & Cable Co. Ltd., Kawasaki-shi, Kanagawa-ken 210-0843 (JP); MATSUYAMA, Eiji, Showa Elt. Wire & Cable Co., Ltd., Kawasaki-shi, Kanagawa-ken 210-0843 (JP); NARUSE, Akiyoshi, Showa Elt. Wire & Cable Co., Ltd, Kawasaki-shi, Kanagawa-ken 210-0843 (JP); MURAKAMI, Yuichi, Showa Elt. Wire & Cable Co., Ltd, Kawasaki-shi, Kanagawa-ken 210-0843 (JP); MUTA, Kenichi, Showa Electric Wire & Cable Co. Ltd, Kawasaki-shi, Kanagawa-ken 210-0843 (JP); YAMAMOTO, Toyomitsu, Showa Elt Wire & Cable Co Ltd, Kawasaki-shi, Kanagawa-ken 210-0843 (JP)
(74) Representative: Sajda, Wolf E., Dipl.-Phys.
(86) International application number: PCT/JP00/07230
(87) International publication number: WO 01/31372

(57) **Abstract**

There is provided an optical attenuator which provides almost the same degree of attenuance even when the difference of wavelength of two different kinds of input optical signals is small. Further, an optical attenuator is realized with dopant concentration in the technically realizable range in increasing the difference of optical attenuance of two different kinds of input optical signals.

Firstly, almost the same degree of attenuance may be obtained even when the difference of wavelengths is small by canceling the wavelength dependency of attenuance of the dopant by increasing the wavelength dependency of the mode field by raising the refractive index of an optical fiber 5 around an axial core 6a within a core 6 area as compared to that of a peripheral part 6b of the core and by taking into account the type and area of the dopant member to be doped and the ratio of the difference Δ2 between the refractive indexes of the clad and the axial core and the difference Δ1 between the refractive index of the clad and the refractive index of the other part, i.e., Δ1/Δ2. Secondly, the difference of attenuances is increased while suppressing the concentration of dopant to the realizable range.

## Description

### TECHNICAL FIELD

The present invention relates to an optical attenuator and more specifically to an optical attenuator used for attenuating optical signals by a certain degree in the fields of optical communications, optical measurements, CATV system and the like.

### BACKGROUND OF THE INVENTION

Hitherto, an optical attenuator comprising an optical fiber containing a certain optical attenuating dopant member has been widely known in general.

However, because the dopant member contained in this optical attenuator has a transmitted light attenuating characteristic that the attenuance varies depending on the wavelength of optical signal, i.e., it has a wavelength dependency, there has been known an optical attenuator which has lessened the wavelength dependency by obtaining almost the equal attenuance by adjusting a mode field diameter of an optical fiber and by limiting a dopant area with respect to the mode field diameter in order to obtain almost the equal attenuance in inputting optical signals of two different wavelengths of 1.3 µm (short wavelength) and 1.5 µm (long wavelength) for instance (Japanese Patent Laid-Open Nos. Hei. 8-136736 and Hei. 8-136737).

With the recent diversification of optical communications, it has come to be required to realize an optical attenuator for obtaining the equal optical attenuance (eliminating the wavelength dependency) even in a narrow wavelength range of 1300 mm ± 50 nm or 1550 ± 50 nm for instance or an optical attenuator whose wavelength dependency of the optical attenuance is increased even more in contrary when optical signals of two different wavelengths of 1.3 µm (short wavelength) and 1.5 µm (long wavelength) are inputted.

However, although the optical attenuators disclosed in Japanese Patent Laid-Open Nos. Hei. 8-136736 and Hei. 8-136737 are effective because they allow almost the equal attenuance to be obtained when optical signals of two different wavelengths of 1.3 µm (short wavelength) and 1.5 µm (long wavelength) whose wavelengths are separated are inputted, they have had a problem that it is unable to obtain the equal optical attenuance (wavelength dependency is large) just by limiting the dopant area or by adjusting the mode field diameter when the difference of the wavelengths is small.

Meanwhile, when the optical signals of two different wavelengths of the short and long wavelengths are inputted, it is theoretically possible to realize the increase of the wavelength dependency of the optical attenuance even more by containing dopant which attenuates the optical signals more when the wavelength of the optical signals is short so that it shows high concentration at part close to the axial core when the mode field is seen from the transverse section of the optical fiber or by containing dopant which attenuates the optical signals more when the wavelength of the optical signals is long so that it shows high concentration at a part close to the outer periphery when the mode field is seen from the transverse section of the optical fiber in the optical attenuator disclosed in Japanese Patent Laid-Open No. Hei. 8-136736.

It is also possible to theoretically realize the one in Japanese patent Laid-Open No. Hei. 8-136737 by reversing the combination of the wavelength characteristics of the mode field diameter and the wavelength characteristics of the dopant member.

However, although the difference between the short wavelength and the long wavelength becomes large by raising the dopant concentration and by limiting the doping area to a narrow range with respect to the mode field diameter, there has been a difficult problem that because the doping concentration of the dopant member which can be contained in the optical fiber is limited, it is unable to create a product whose characteristics are stable as an optical fiber when the concentration is too high and it is unable to technologically create ones whose doping area is very narrow.

The invention has been devised in view of such difficult problem and its object is firstly to provide an optical attenuator which can equalize optical attenuance of optical signals having different wavelengths which are very close and is secondly to provide an optical attenuator which can maximize the difference of optical attenuance of the optical signals having different wavelengths in the state in which each characteristic of the optical fiber is stable and the dopant concentration and doping area range are realistic by arranging the optical attenuator whose doping range may be realized while suppressing the dopant concentration relatively low.

### DISCLOSURE OF THE INVENTION

In order to achieve the above-mentioned objects, an inventive optical attenuator is constructed so that the refractive index at the center part of a core of a single mode optical fiber is increased as compared to that of the peripheral part of the core.

In this case, the wavelength dependency of the attenuance of transmitted light caused by the size of the mode field diameter is increased by adopting one selected from a group containing a graded-index type (the refractive index rises continuously from the peripheral part to the center part), parabolic shape, triangular wave shape, square wave shape and trapezoidal wave shape as the distribution of refractive index of the core.

By constructing the optical attenuator as described above, it is possible to widen the limited width of the dopant area for obtaining the required attenuating characteristics as much as possible and to suppress the concentration low utmost.

An inventive optical attenuator contains dopant which attenuates transmitted light more when its wavelength is longer in a signal mode optical fiber and is constructed so that the dopant area is limited to the center part of the core and so that the refractive index at the center part of the core is raised as compared to that of the peripheral part of the core.

In this case, the wavelength dependency of the attenuance of transmitted light caused by the size of the mode field diameter is increased by adopting one selected from a group containing a graded-index type, parabolic shape, triangular wave shape, square wave shape and trapezoidal wave shape as the distribution of refractive index of the dopant area.

By constructing the optical attenuator as described above, it is possible to obtain the equal attenuance when two kinds of optical signals having different wavelengths which are short and whose difference is small (1300 nm ± 50 nm) are inputted.

An inventive optical attenuator contains dopant which attenuates transmitted light more when its wavelength is shorter in a signal mode optical fiber and is constructed so that the dopant area is limited to the peripheral part of the core and so that the refractive index at the center part of the core containing no dopant is raised as compared to that of the peripheral part of the core.

In this case, the wavelength dependency of the attenuance of transmitted light caused by the size of the mode field diameter is increased by adopting one selected from a group containing a graded-index type, parabolic shape, triangular wave shape, square wave shape and trapezoidal wave shape as the refractive index profile at the center part of the core where no dopant is contained.

By constructing the optical attenuator as described above, it is possible to obtain the equal attenuance when two kinds of optical signals having different wavelengths which are long and whose difference is small (1550 nm ± 50 nm) are inputted.

An inventive optical attenuator contains dopant which attenuates transmitted light more when its wavelength is shorter in a signal mode optical fiber and is constructed so that the dopant area is limited to the center part of the core and so that the refractive index at the center part of the core containing no dopant is raised as compared to that of the peripheral part of the core.

In this case, the wavelength dependency of the attenuance of transmitted light caused by the size of the mode field diameter is increased by adopting one selected from a group containing a graded-index type, parabolic shape, triangular wave shape, square wave shape and trapezoidal wave shape as the distribution of refractive index of the center part of the core containing no dopant.

By constructing the optical attenuator as described above, it is possible to obtain optical signals of two different wavelengths whose difference of attenuance of transmitted light caused by the difference of the wavelengths is maximized.

An inventive optical attenuator contains dopant which attenuates transmitted light more when its wavelength is longer in a signal mode optical fiber and is constructed so that the dopant area is limited to the peripheral part of the core and so that the graded-index type is adopted as the refractive index of the dopant area to increase the wavelength dependency of attenuance of transmitted light caused by the size of the mode field diameter.

An inventive optical attenuator is constructed so that the refractive index at the center part of the core is raised as compared to that of the peripheral part of the core by containing dopant whose transmitted light attenuating characteristics depends on the wavelength of optical signal in the optical fiber so that the dopant concentration of the dopant area of a single mode optical fiber is distributed non-uniformly by seeing a mode field which substantially contributes to the transmission of optical signals in the radial direction in the transverse section of the optical fiber.

In this case, the wavelength dependency of the attenuance of transmitted light caused by the size of the mode field diameter is increased by adopting one selected from a group containing a graded-index type, parabolic shape, triangular wave shape, square wave shape and trapezoidal wave shape as the distribution of refractive index of the dopant area.

By constructing the optical attenuator as described above, it is possible to obtain the required attenuating characteristics even when the dopant area and the dopant concentration are suppressed low.

### BRIEF DESCRIPTION OF THE DRAWINGS

FIG. 1 shows the structure of one embodiment of an inventive optical attenuator, wherein the upper part of the figure shows an end face of the optical attenuator and the lower part shows a refractive index profile seen from the side thereof.
FIG. 2 shows the state of use in which the inventive optical attenuator is disposed at the center of ferrule.
FIGs. 3a and 3b are graphs showing the relationship between wavelength and loss by using various dopants as parameters.
FIG. 4 is a graph showing the optical signal power distribution within the inventive optical attenuator.
FIG. 5 is a graph showing the relationship between the ratio of difference of refractive index Δ1/Δ2, whereΔ1 is the difference between the maximum refractive index around the axial core of the core and the refractive index around the clad part in the inventive optical attenuator and Δ2 is the difference between the maximum refractive index around the outer periphery of the core and the refractive index of the clad part, and the difference of loss at 1.50 µm and 1.60 µm.
FIG. 6 is a graph showing the attenuance with respect to wavelength when cobalt Co is doped at the center part of the core of the inventive optical attenuator.
FIG. 7 shows the structure of another embodiment of the inventive optical attenuator, wherein the upper part of the figure shows an end face of the optical attenuator and the lower part shows the refractive index profile seen from the side thereof.
FIG. 8 is a graph showing the attenuance with respect to wavelength when samarium Sm is doped in the whole core and when samarium Sm is doped only in the axial core.
FIG. 9 is a graph showing the attenuance with respect to wavelength when cobalt Co is doped in the whole core and when cobalt Co is doped only in the outer periphery of the core.

### BRIEF DESCRIPTION OF REFERENCE NUMERALS

- 5, 5': Single Mode Optical Fiber
- 6, 6': Core
- 6a, 6a': Center Part of Core (Center Core) (Part close to axial core in center area)
- 6b, 6b': Outer Periphery of Core (Outer Core) (Part close to outer periphery of core)
- 7, 7': Dopant Area
- 9, 9': Mode Field

### BEST MODE FOR CARRYING OUT THE INVENTION

Preferred embodiments of an inventive optical attenuator will be explained below in accordance to the drawings.

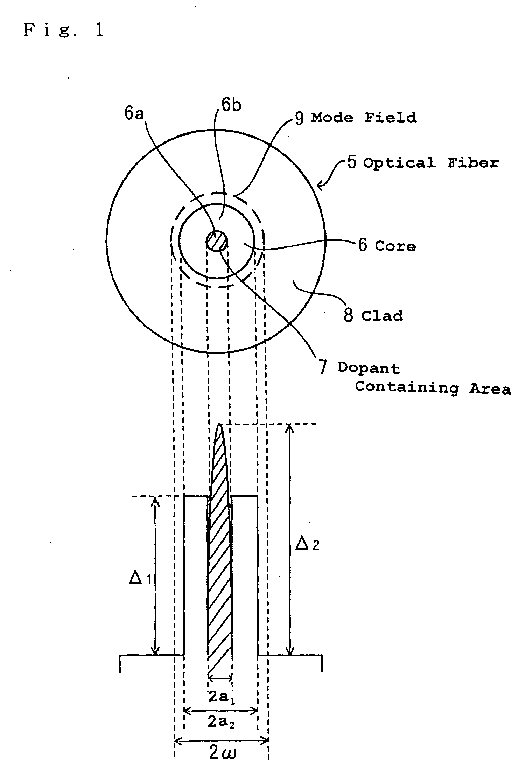

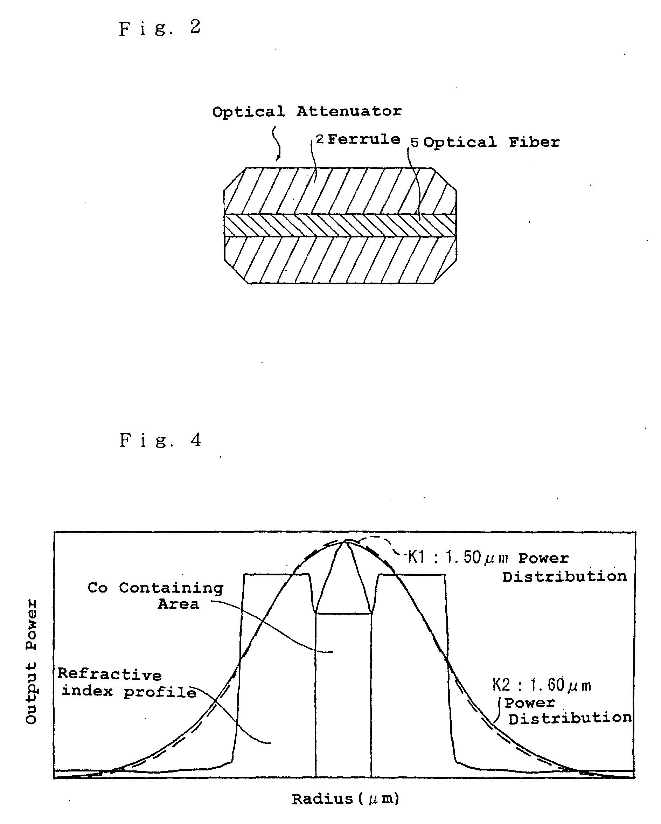

FIG. 1 is a section view showing the structure of the inventive optical attenuator, wherein the upper part of the figure shows an end face of the optical attenuator and the lower part shows a refractive index profile seen from the side thereof. This optical fiber 5 is used by disposing at the center of a ferrule 2 by a method as shown in FIG. 2 for example. That is, it is used so that it receives an optical signal from one end thereof and it outputs from the other end after attenuating the optical signal by a certain degree. Dopant for attenuating the optical signal is doped in the optical fiber 5 to that end.

Here, a graded-index type (its refractive index increases continuously from the outer peripheral part to the center part) is adopted as a refractive index profile at the part 6a (center core) close to the axial core of the core 6 of the inventive optical attenuator and high concentrate dopant is doped within this area 7. The dopant area 7 is hatched in the figure.

Because a core diameter 2a₂ is very small in the single mode fiber, energy of the optical signal propagates centering on the core 6 while actually overflowing even to part of the clad 8 at the outer periphery of the core 6. The range in which the large part of the energy is contained is a mode field 9 part which substantially contributes to the transmission of the optical signals and may be found qualitatively by a method explained later by using Equation 1. It is noted that it is the same even in the step-index type fiber or in the graded-index type fiber. In the optical fiber 5 shown in FIG. 1, the diameter of the mode field 9 is denoted as 2ω, the diameter of the dopant area 7 as 2a₁ and the diameter of the core 6 as 2a₂. The difference between the maximum refractive index around the axial core of the core 6 and the refractive index of the clad 8 part is denoted as Δ2 and the difference between the maximum refractive index of the outer peripheral part 6b (outer core) of the core 6 and the refractive index of the clad 8 part as Δ1.

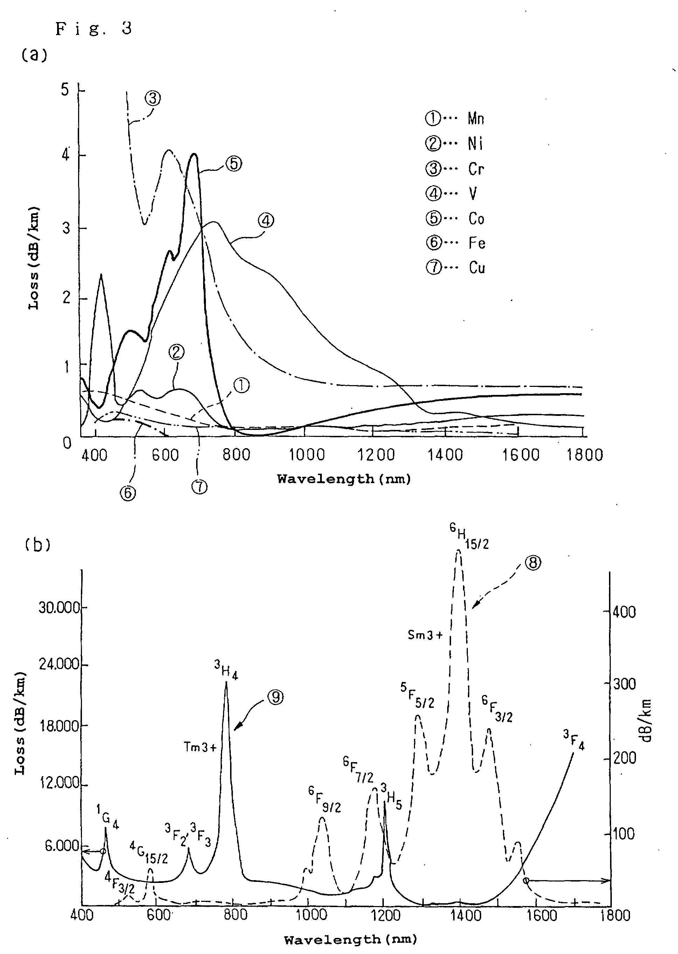

Such dopants contained in the optical fiber 5 to attenuate the optical signals will be explained here. FIGs. 3a and 3b are graphs showing the relationship between wavelength and loss of various dopants. The vertical axis of the graph represents the wavelength in nanometer [nm] and the vertical axis represents the optical attenuance in [dB/km]. Transition metal or rare-earth metal dopant is normally used for optical fibers for communications. They may be used by mixing one or two or more, respectively. In FIG. 3a, (1) denotes the characteristics of manganese Mn, (2) nickel Ni, (3) chrome Cr, (4) vanadium V, (5) cobalt Co, (6) iron Fe, and (7) copper Cu. In FIG. 3b, (8) represents the characteristics of samarium Sm and (9) thulium Tm.

The first embodiment of the inventive optical attenuator uses the dopant which attenuates transmitted light more when the wavelength of the optical signal is longer. When the wavelength to be used in this optical attenuator is around 1.5 µm to 1.6 µm for example, it can be seen from FIG. 3a that cobalt Co is suited as the dopant.

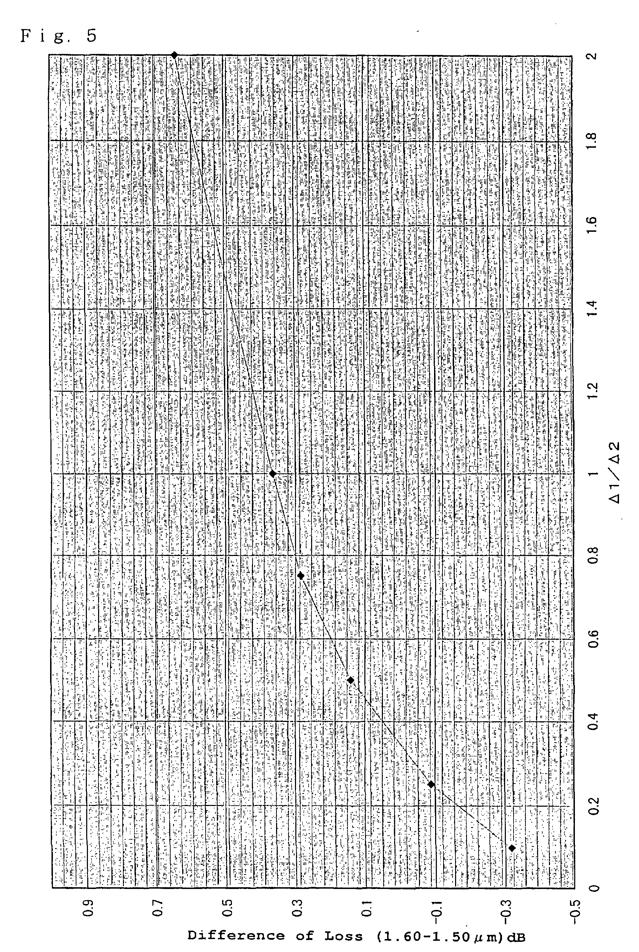

FIG. 4 shows the optical signal power distribution when cobalt Co is used as the dopant and the dopant is contained in the area as shown in FIG. 1. The vertical axis of FIG. 4 represents the output power and the horizontal axis represents the position of the fiber in the radial direction. K1 in FIG. 4 is power distribution in the radial direction when an optical signal of 1.5 µm of wavelength is transmitted through the optical fiber. A curve K2 represents the power distribution of an optical signal of 1.6 µm.

Table 1 shows the difference of mode field diameter (hereinafter referred to as "MFD") corresponding to the respective wavelengths λ1 and λ2 in each fiber when the respective wavelengths λ1 = 1.50 µm and λ2 = 1.60 µm are inputted to the fiber having the structure of the first embodiment of the inventive optical attenuator shown in FIG. 4 and to the normal step index type fiber.

**Table 1**

| | Difference (µm) of mode field diameter of 1.50 µm and 1.60 µm |
|---|---|
| Embodiment | 0.52 |
| Step index | 0.25 |

This shows that the difference of MFD of the inventive fiber caused by the difference of waveleneghs is large (wavelength dependency is large).

Then, when cobalt Co is contained concentratedly to the axial core part of the core, the longer the wavelength of a signal, the less the rate of the part influenced by the attenuation seen from the whole signal energy becomes.

This means that it cancels the wavelength dependency of the optical attenuance of the dopant member.

As a result, the optical signals of short and long wavelengths whose difference of wavelength is small attenuate in the same degree in this attenuator as a whole.

In case of the conventional step index type fiber, the concentration of dopant has become high and it has caused a serious production problem as a result when it is designed so as to show the same degree of attenuation with the first embodiment described above because the dopant area of cobalt Co must be narrowed because the wavelength dependency of the optical attenuance of the MFD is small.

A concrete example will be shown below with reference to Equation 1. Equation 1 shows methods for calculating the attenuance α of the optical fiber and the mode field diameter ω.

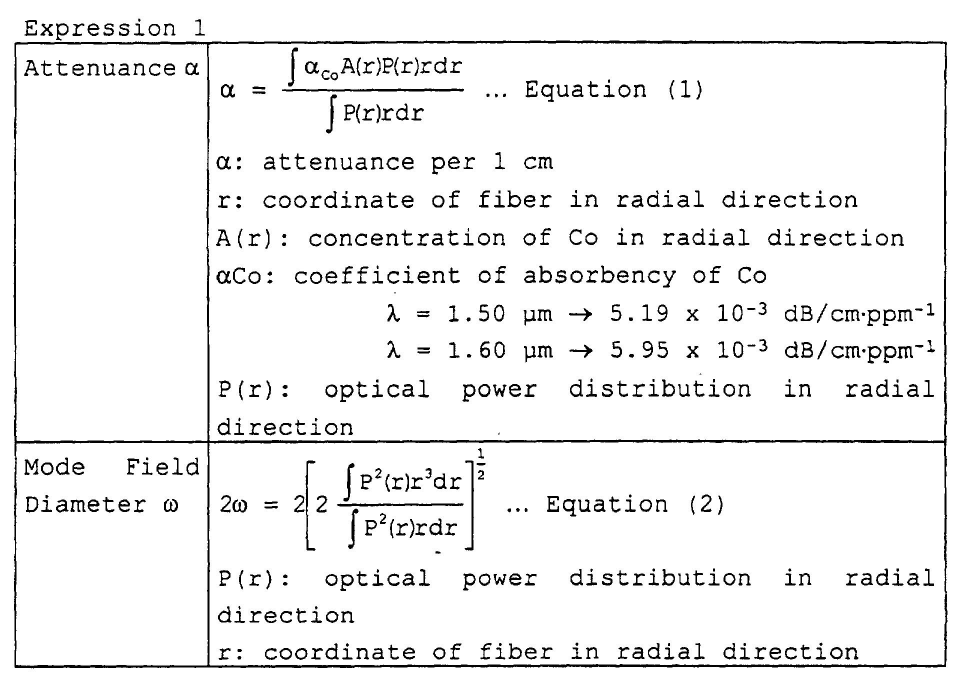

As shown in Equation (1), the attenuance α of the optical signal in the optical fiber may be found from the power distribution P(r) of the optical signal in the radial direction and the distribution of concentration of cobalt, i.e., the dopant. The mode field diameter ω may be found from Equation (2).

The ratio (a1/a2) of the area in which the graded-index type is adopted as the profile containing cobalt Co to the core diameter approaches to the step index type when it is too large or too small and the wavelength dependency of the mode field diameter ω approaches to the step index type. When the ratio (a1/a2) is small, although the wavelength dependency of the attenuance α becomes small because the dopant area of cobalt Co becomes small even when the wavelength dependency of the mode field diameter ω is small, there have been problems such as an increase of doped amount of cobalt Co and an increase of processing steps. Here, a result of using a1/a2 = 0.5 is shown.

FIG. 5 is a graph representing the ratio of difference of refractive index Δ1/Δ2 by the horizontal axis and the difference of loss (attenuance) at 1.50 µm and 1.60 µm when the attenuance at 1.55 µm is 10 dB by the vertical axis. It can be seen from FIG. 5 that the greater the ratio Δ1/Δ2, the wider the difference of the attenuance at 1.50 µm and 1.60 µm becomes. The wavelength dependency of attenuance of the dopant member may be canceled by this value.

It is noted that Table 2 shows the structural characteristics of the fiber of Δ1/Δ2 = 0.75, whose wavelength dependency is small, as shown in FIG. 5. Δ1/Δ2 is not 0.35 because it shows the practical fiber structure in which bending loss and others are taken into account.

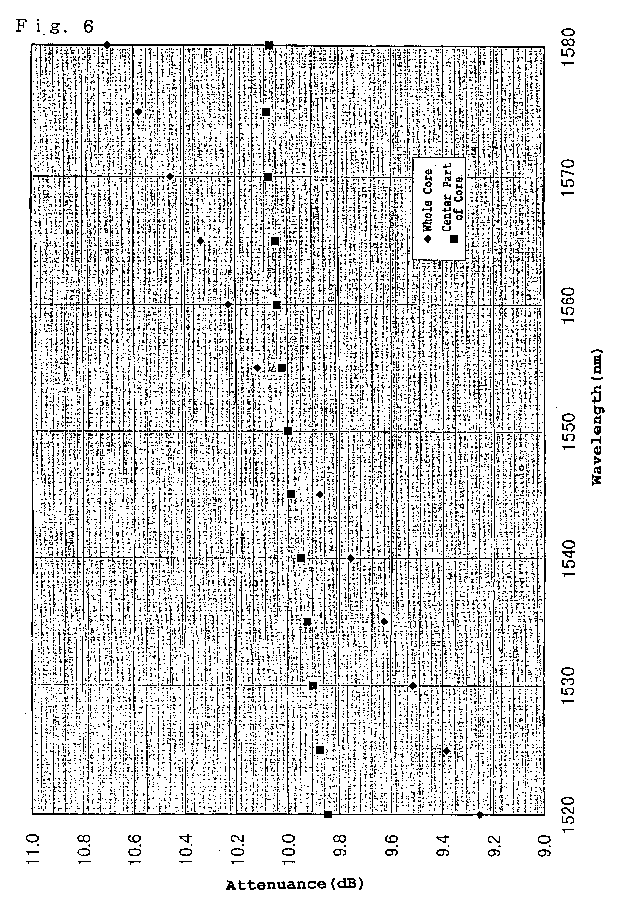

FIG. 6 is a graph showing the attenuance with respect to the wavelength of the fiber in Table 2. The wavelength dependency is lessened by doping cobalt Co to the center part of the core of the optical attenuator and by adopting the graded-index type as the profile.

**Table 2**

| | Core | a1/a2 | Δ1/Δ2 | MFD | MFD |
|---|---|---|---|---|---|
| | Diameter | | | (1.50 µm) | (1.60 µm) |
| Embodiment | 7.4 µm | 0.5 | 0.5 | 9.15 | 9.67 |
| Step-Index | 9.5 µm | 0.5 | 0.5 | 9.26 | 9.51 |

This sample has been set so that the whole distribution of concentration of cobalt becomes fixed within the range in which cobalt Co is contained. The attenuance of the optical fiber has been set so that it becomes 10 dB/m. As a result, Δ1/Δ2= 0.35 and the wavelength dependency was eliminated when a1/a2 = 0.5. The wavelength independent optical attenuator may be obtained by increasing Δ1/Δ2 when a1/a2 becomes large and by decreasing Δ1/Δ2 when a1/a2 becomes small.

The dopant which attenuates transmitted light more when the wavelength of the optical signal is longer has been used at the part 6a (center core) close to the axial core of the core 6 of the optical fiber 5 in the first embodiment described above. Meanwhile, dopant which attenuates transmitted light more when the wavelength of the optical signal is shorter may be also used by changing the area where the dopant is doped. For instance, vanadium V of (4) and the like may be cited in the example of FIG. 3a.

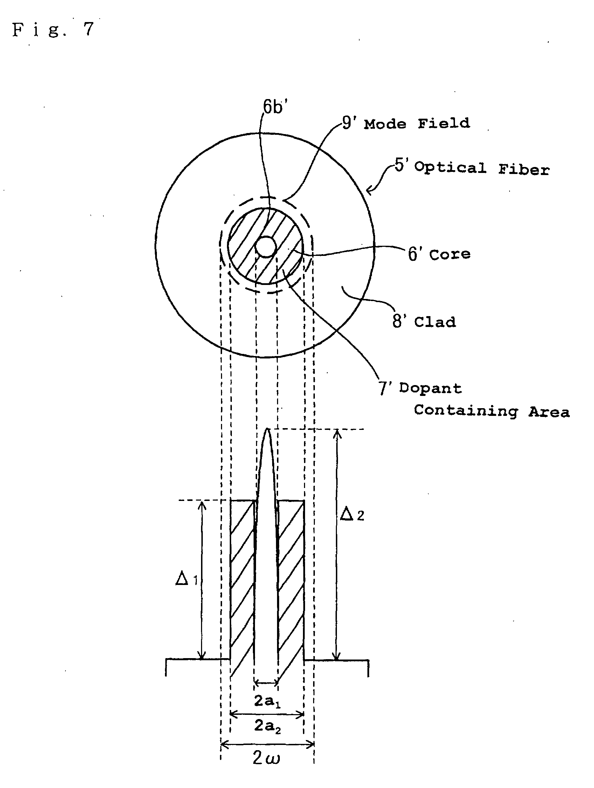

FIG. 7 shows a second embodiment of the inventive optical attenuator using the dopant which attenuates transmitted light more when the wavelength of the optical signal is shorter. In the second embodiment, a dopant containing area 7' is created by containing the dopant which attenuates the transmitted light more when the wavelength of the optical signal is shorter at a part 6b (outer core) of a core 6' except of the diameter in which the refractive index profile is set as the graded-index type. In this case, the longer the wavelength of the optical signal whose power distribution extends in the radial direction of the optical fiber 5', the more it is influenced by the dopant.

Thus, the optical attenuation characteristics of the inventive optical attenuator to the optical signal of wavelength within a certain range may be almost equalized by increasing the wavelength dependency of the mode fields 9 and 9' which substantially contribute to the transmission of optical signal of the single mode optical fiber by controlling the refractive index profile, by adequately selecting the distribution of concentration of dopant by seeing within the transverse section of the cores 6 and 6' of the optical fibers 5 and 5' and by using the dopant whose transmitted light attenuating characteristics depends on the wavelength of optical signal. It is noted that although the dopant is doped only to the axial core part 6a of the core 6 or to the peripheral part 6b of the core 6 in the embodiments described above, it is possible to apply appropriate distribution of concentration. Also, it is not necessary to obtain the uniform characteristics to all wavelengths of optical signals and it is possible to set a containing range so that a certain attenuance may be obtained per each range for optical signals of several ranges.

The first and second embodiments have the structure effective in obtaining almost the same attenuance to one having the small difference of wavelengths of optical signals of two different kinds of wavelengths to be inputted.

Next, a third embodiment of the inventive optical attenuator will be explained.

The refractive index profile around the axial core of the core of the single mode fiber is the same with those of the first and second embodiments described above.

The part which is different is that the wavelength dependency of the MFD is increased by doping a member which attenuates transmitted light when the wavelength is short, e.g. samarium Sm shown by (8) in FIG. 3b, as the dopant member to be doped in the axial core part and by adjusting the ratio of the diameter at the part where the refractive index of the axial core part is set as the graded-index type and the core diameter.

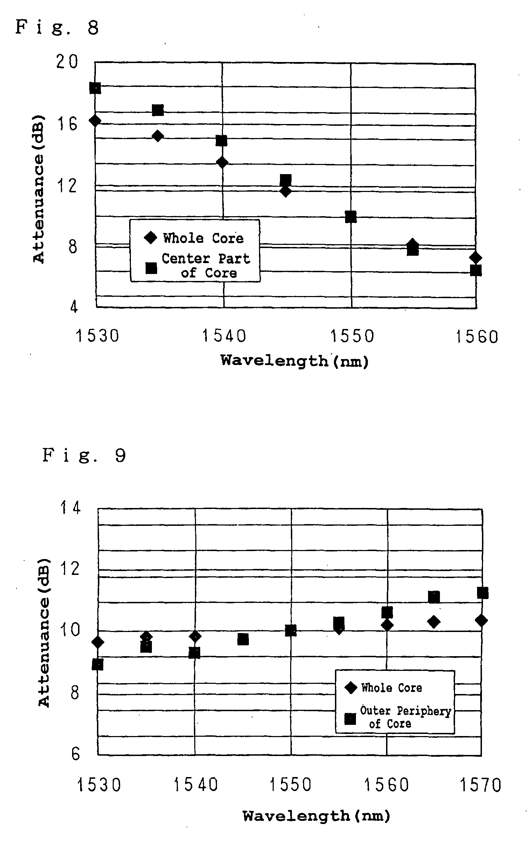

FIG. 8 is a graph showing the attenuance with respect to wavelength when samarium Sm is doped in the whole core and when samarium Sm is doped only in the axial core. It can be seen from the graph that the attenuance is great when samarium is doped only to the axial core between 1530 nm to 1550 nm.

The shorter the wavelength, the greater the optical signal attenuates when two kinds of optical signals having different wavelengths are inputted, a great attenuance may be obtained without reducing the center core diameter more than one required and without increasing the dopant concentration by constructing as described above.

Accordingly, this construction is very effective in increasing the difference of attenuance of those optical signals by inputting the two kinds of optical signals having different wavelengths.

Next, a fourth embodiment of the inventive optical attenuator will be explained.

The refractive index profile around the axial core of the core of the single mode fiber is the same with those of the first and second embodiments described above.

What is different is that the wavelength dependency of the MFD is increased by doping the member which attenuates transmitted light more when its wavelength is longer, e.g., cobalt Co, at the part of core around the diameter where the refractive index profile of the axial core part is set as the graded-index type and by adjusting the ratio of the diameter of the part where the refractive index of the axial core part is set as the graded-index type and the core diameter.

FIG. 9 is a graph showing the attenuance with respect to wavelength when cobalt Co is doped to the whole core and when cobalt Co is doped only to the outer periphery of the core. It can be seen from the figure that the attenuance of one in which Co is doped only to the outer periphery of the core is greater between 1560 nm to 1570 nm.

The longer the wavelength, the greater the optical signal attenuates when two kinds of optical signals having different wavelengths are inputted, a great attenuance may be obtained without increasing the dopant concentration more than what is required by constructing as described above.

Accordingly, this construction is very effective in increasing the difference of attenuance of those optical signals by inputting the two kinds of optical signals having different wavelengths.

### INDUSTRIAL APPLICABILITY

As it is apparent from the above description, according to the inventive optical attenuator, it is possible to fix the optical attenuance for optical signals having different wavelengths which are very close by arranging the optical attenuator which allows the doping range to be realized while suppressing the dopant concentration relatively low.

Further, according to the inventive optical attenuator, it is possible to increase the difference of optical attenuance as much as possible while having the realistic dopant concentration and doping area range in the state in which each characteristic of the optical fiber is stabilized for optical signals having different wavelengths.

In particular, it is possible to equalize the attenuance of different wavelengths by increasing the wavelength dependency of the MFD by adjusting the ratio of the diameter and the core diameter by increasing the refractive index around the axial core within the core as compared to the peripheral part of the core and by doping the dopant member which attenuates signals having longer wavelength more for example concentratedly within the diameter in which the refractive index around the axial core of the core is increased as compared to the peripheral part of the core to cancel the attenuance wavelength dependency of the dopant member.

Further, it becomes effective means in equalizing the attenuance of optical signals having a small difference of wavelengths by concentratedly doping the dopant member which attenuates more when its wavelength is short within the core except of the diameter in which the refractive index around the axial core within the core is increased as compared to the peripheral part of the core.

Still more, it is possible to increase the difference of attenuance caused by the difference of wavelengths by increasing the wavelength dependency of the MFD by adjusting the ratio of the diameter constructed such that the refractive index around the axial core within the core is increased as compared to the peripheral part of the core and the core diameter, by doping the dopant member which attenuates more when the wavelength is short concentratedly within the diameter in which the refractive index at the center part within the core is increased as compared to the peripheral part of the core and by increasing the wavelength dependency of attenuance of the dopant member.

Moreover, it becomes very effective means in realizing the increase of attenuance of optical signals by the difference of the wavelengths without reducing the MFD more than what is required and without concentrating also the dopant concentration more than what is required by doping the dopant member which attenuates more when the wavelength is longer within the core except of the diameter in which the refractive index at the center part of the core around the axial core of the core is increased as compared to the peripheral part of the core.

## Claims

1. An optical attenuator **characterized in that** the refractive index at the center part of a core of a single mode optical fiber is raised as compared to that of the peripheral part of the core.

2. The optical attenuator as described in Claim 1, **characterized in that** the wavelength dependency of the mode field is increased by adopting one selected from a group containing a graded-index type, parabolic shape, triangular wave shape, square wave shape and trapezoidal wave shape as the distribution of refractive index of said core.

3. An optical attenuator containing dopant which attenuates transmitted light more when its wavelength is longer in a signal mode optical fiber, **characterized in that** the dopant area is limited at the center part of the core and that the refractive index at the center part of said core is raised as compared to that of the peripheral part of said core.

4. The optical attenuator as described in Claim 3, **characterized in that** one selected from a group containing a graded-index type, parabolic shape, triangular wave shape, square wave shape and trapezoidal wave shape is adopted as the distribution of refractive index of said dopant area.

5. An optical attenuator containing dopant which attenuates transmitted light more when its wavelength is longer in a signal mode optical fiber, **characterized in that** the dopant area is limited to the peripheral part of the core and that the refractive index at the center part of said core containing no dopant is raised as compared to that of the peripheral part of said core.

6. The optical attenuator as described in Claim 5, **characterized in that** one selected from a group containing a graded-index type, parabolic shape, triangular wave shape, square wave shape and trapezoidal wave shape is adopted as the refractive index profile at the center part of said core where no dopant is contained.

7. An optical attenuator containing dopant which attenuates transmitted light more when its wavelength is shorter in a signal mode optical fiber, **characterized in that** the dopant area is limited to the center part of the core and that the refractive index at the center part of said core is raised as compared to that of the peripheral part of said core.

8. The optical attenuator as described in Claim 7, **characterized in that** one selected from a group containing a graded-index type, parabolic shape, triangular wave shape, square wave shape and trapezoidal wave shape is adopted as the distribution of refractive index of said dopant area.

9. An optical attenuator containing dopant which attenuates transmitted light more when its wavelength is longer into a signal mode optical fiber, **characterized in that** the dopant area is limited to the peripheral part of the core and that the refractive index at the center part of said core is raised as compared to that of the peripheral part of said core.

10. The optical attenuator as described in Claim 9, **characterized in that** one selected from a group containing a graded-index type, parabolic shape, triangular wave shape, square wave shape and trapezoidal wave shape is adopted as the refractive index profile at said dopant area.
